Europäisches Patentamt

European Patent Office

Office européen des brevets

(11) Publication number: **0 180 405**
**B1**

## EUROPEAN PATENT SPECIFICATION

(45) Date of publication of patent specification :
22.02.89

(51) Int. Cl.⁴ : **C 03 C 3/21**, C 04 B 37/00,
C 04 B 35/82// H01F1/113

(21) Application number : 85307649.5

(22) Date of filing : 23.10.85

(54) Glass composition for binding and filling ceramic parts.

(30) Priority : 02.11.84 JP 230198/84

(43) Date of publication of application :
07.05.86 Bulletin 86/19 -

(45) Publication of the grant of the patent :
22.02.89 Bulletin 89/08

(84) Designated contracting states :
DE GB

(56) References cited :
FR--A-- 2 135 220
US--A-- 3 278 317

(73) Proprietor : HITACHI, LTD.
6, Kanda Surugadai 4-chome Chiyoda-ku
Tokyo (JP)

(72) Inventor : Naito, Takashi
Yuuhou-Ryou 403 6-20-3 Ayukawa-cho
Hitachi-shi Ibaraki 316 (JP)
Inventor : Namekawa, Takashi
4-5-7 Kamine-cho
Hitachi-shi Ibaraki 317 (JP)
Inventor : Ogihara, Satoru
1-15-7 Minamikouya-cho
Hitachi-shi Ibaraki 319-12 (JP)

(74) Representative : Ellis, Edward Lovell et al
MEWBURN ELLIS & CO. 2/3 Cursitor Street
London EC4A 1BQ (GB)

**Description**

The present invention relates to an article including at least one ceramic part and a glass composition having a low softening temperature bonding and/or filling the ceramic part or parts, and particularly to such an article comprising ferrite constituent parts used for highly efficient magnetic heads.

A glass composition used for bonding and filling ceramic parts, particularly ferrite parts, is required to have a low softening temperature, which is one of the parameters for assessing the working temperature of the glass, so as to minimize adverse thermal influences on the ceramic parts and further on materials supported on the ceramic parts, for example an amorphous alloy, during the bonding and filling operation.

The glass is further required to have a slightly smaller thermal expansion coefficient than the ceramic parts to be bonded and filled so as to minimize generation of cracks in the bonding and filling glass, which reduces the adhesive strength of the glass.

The thermal expansion coefficient of the ferrite constituents used for magnetic heads is 90-140 x $10^{-7}$/°C in the range from room temperature to 300 °C.

One of the conventional low softening temperature glasses is a glass composition including primarily lead oxide PbO such as a PbO-$B_2O_3$ system, a PbO-$B_2O_3$-ZnO system, a PbO-$B_2O_3$-$SiO_2$ system and variations of PbO-$B_2O_3$-$SiO_2$ system.

Generally, the lower the softening temperature of a glass composition, the larger the thermal expansion coefficient of the glass is. This is true with the above PbO glass, in that, when the amount of PbO in the glass increases, the softening temperature thereof decreases, but the thermal expansion coefficient adversely increases.

Further PbO glass corrodes the ferrite constituents at the boundary with the PbO glass so that the magnetic property of the ferrite is reduced.

Still further the PbO glass has a low abrasive resistance which is not desirable in a bonding and filling material for the ferrite constituents of the magnetic heads.

Another conventional low softening temperature glass other than the PbO glass is a glass composition including vanadium pentoxide ($V_2O_5$) as its main component. This has a lower transition temperature and a lower yield temperature, which are also parameters for assessing a working temperature of the glass, and further a smaller thermal expansion coefficient than that of the low softening temperature glass including PbO as its main component. However, the $V_2O_5$ glass loses its fluidity because of excess crystallization during reheating of the glass so that a higher working temperature is required for sufficient bonding and filling. The crystallization of the $V_2O_5$ glass during reheating can be limited by decreasing the amount of $V_2O_5$ in the glass, but this raises the transition temperature and the yield temperature of the $V_2O_5$ glass.

Japanese Patent Application Laid Open No. 53-82826 (published on July 21, 1978) discloses one example of a low softening temperature glass including $V_2O_5$, which is a system containing 7.5-14 wt% $Na_2O$, 20-50 wt% ZnO, 0-35 wt% $B_2O_3$, 20-60 wt% $P_2O_5$, 3-15 wt% $V_2O_5$ and which is used for bake-painting metal plates with a comparatively low heat resistance such as aluminium plates and thin iron plates, and also for sealing. However the disclosed glass has a relatively large thermal expansion coefficient of 91-142 x $10^{-7}$/°C which is unsuitable for applying to the ferrite constituents and further has a relatively high softening temperature of about 500 °C.

Japanese Patent Application Laid Open No. 58-74539 (published on May 6, 1983) discloses another example of a low softening temperature glass including $V_2O_5$ which is a system containing 15-35 wt% $B_2O_3$, 7-22 wt% ZnO, 0-5 wt% $V_2O_5$, 19-39 wt% $Bi_2O_3$, 19-39 wt% $Tl_2O$ and which is used for bonding and filling ferrite constituents for magnetic heads. The disclosed glass does not corrode the ferrite constituents and has a smaller thermal expansion coefficient of 80-90 x $10^{-7}$/°C than the ferrite, but has a high softening temperature of 560-600 °C which increases a working temperature of the glass.

An object of the present invention is to provide an article including at least one ceramic part and a glass composition having both a low softening temperature and a small thermal expansion coefficient bonding and filling the ceramic part or parts, particularly ferrite parts for magnetic heads.

The present invention is set out in claim 1 :

An article including at least one ceramic part bonded or filled by a glass composition, said composition essentially consisting of

(a) 35-75 wt% of vanadium pentoxide ($V_2O_5$),
(b) 15-30 wt% of phosphorus pentoxide ($P_2O_5$), and
(c) 5-40 wt% of at least one metallic oxide with a low melting temperature selected from sodium monoxide ($Na_2O$), potassium monoxide ($K_2O$), rubidium monoxide ($Rb_2O$), caesium monoxide ($Cs_2O$), tellurium dioxide ($TeO_2$) and thallium monoxide ($Tl_2O$),

and optionally further including at least one of boron oxide ($B_2O_3$), zinc oxide (ZnO), bismuth trioxide ($Bi_2O_3$), silicon dioxide ($SiO_2$), aluminium oxide ($Al_2O_3$), antimony pentoxide ($Sb_2O_5$) and cobalt monoxide (CoO), wherein

(d1) the amount of $B_2O_3$ is not more than 10 wt%,
(d2) the amount of ZnO is not more than 16 wt%,
(d3) the amount of $Bi_2O_3$ is not more than 12 wt%,
(d4) the amount of $SiO_2$ is not more than 3 wt%,
(d5) the amount of $Al_2O_3$ is not more than 5 wt%,
(d6) the amount of $Sb_2O_5$ is not more than 7 wt%, and
(d7) the amount of CoO is not more than 1 wt%.

The glass composition used in the invention can have both a lower softening temperature and a smaller thermal expansion coefficient than a low softening temperature glass composition including PbO as its main component. Furthermore, the glass composition used in the present invention does not corrode the ferrite constituents at the boundary with the glass.

The glass composition used in the present invention includes $V_2O_5$ as its main component, but avoids the problem of crystallization and maintains a non-crystalline state during reheating.

The glass composition used in the present invention preferably has a softening temperature of 310-400 °C, a melting temperature of 900-1 100 °C and a working temperature for bonding and filling ceramics, particularly ferrites, of 360 °C-500 °C and has a thermal expansion coefficient of 70-130 x 10$^{-7}$ °C.

Preferably in the glass composition, excluding water,

(a) the amount of $V_2O_5$ is 55-70 wt%
(b) the amount of $P_2O_5$ is 18-25 wt%
(c) the total amount of $Na_2O$, $K_2O$, $Rb_2O$ and $Cs_2O$ is not more than 10 wt%
(c2) $TeO_2$ is absent, and
(c3) the amount of $Tl_2O$ is not more than 10 wt%.

The reasons for the critical amounts defined above of respective components of the glass composition of the present invention are explained below.

$V_2O_5$ lowers the transition temperature and yield temperature and decreases the thermal expansion coefficient of the glass. However, when the amount of $V_2O_5$ exceeds 75 wt%, fluidity of the glass decreases on reheating thereof. Conversely, when the amount of $V_2O_5$ is below 35 wt%, the reduction of transition and yield temperatures and thermal expansion coefficient cannot be obtained.

$P_2O_5$ improves fluidity of the glass ; however when the amount of $P_2O_5$ exceeds 30 wt%, the softening temperature of the glass rises and the thermal expansion coefficient increases. On the other hand, when the amount of $P_2O_5$ decreases below 15 wt%, the fluidity of the glass becomes insufficient.

Alkaline metal oxides such as $Na_2O$, $K_2O$, $Rb_2O$ and $Cs_2O$, particularly $Rb_2O$ and $Cs_2O$ contribute to reduce the softening temperature of the glass.

However these four components tend to increase the thermal expansion coefficient of the glass, and so the total amount of the four is preferred to be limited to below 15 wt%.

$TeO_2$ lowers the softening temperature and increases fluidity of the glass ; however, the amount of $TeO_2$ is preferably limited below 25 wt% for a satisfactory thermal expansion coefficient.

$Tl_2O$ contributes considerably to lowering of the softening temperature of the glass, but it increases the thermal expansion coefficient of the glass and its amount preferably does not exceed 20 wt%.

$B_2O_3$ increases the chemical durability of the glass, however, when its amount exceeds 10 wt%, the softening temperature of the glass rises beyond the desired limit.

ZnO increases the chemical durability and decreases the thermal expansion coefficient of the glass ; however when the amount exceeds 16 wt%, the softening temperature of the glass rises considerably.

$Bi_2O_3$ increases the chemical resistance of the glass, especially to alkaline chemicals. However, when the amount exceeds 12 wt%, the glass tends to devitrify.

$SiO_2$ improves chemical durability, but when the amount exceeds 3 wt%, the softening temperature of the glass rises beyond the desired limit.

$Al_2O_3$ prevents devitrification of the glass, but when the amount exceeds 5 wt%, the softening temperature of the glass rises beyond the desired limit.

$Sb_2O_5$ also prevents devitrification and decreases the thermal expansion coefficient of the glass. However when the amount exceeds 7 wt%, the softening temperature of the glass rises beyond the desired limit.

CoO improves wettability of the glass to ferrite, however when the amount exceeds 1 wt%, the softening temperature of the glass rises beyond the desired limit.

Any materials which produce the above defined oxides and any mixtures thereof obtained by firing are used as a raw material for the glass composition used in the present invention.

A method of producing the glass used in the present invention is now described. Combined and mixed raw materials of the glass components were put into an alumina or a platinum crucible and were melted and mixed at 900-1 100 °C for 2 hours in an electric furnace. The glass composition was produced by pouring into a graphite jig kept at 250-300 °C for cooling and then further cooled by aircooling.

The present invention will now be described in greater detail by way of example, with reference to the accompanying drawings, wherein :

Figs. 1-3 are plots of data mostly indicated in Tables 7-10. In particular :

Fig. 1 shows the relationship between thermal expansion coefficient and softening temperature (point) of glass compositions used in the present invention and conventional glass compositions ;

Fig. 2 shows the relationship between thermal expansion coefficient and transition temperature (point) of glass compositions used in the present invention and of conventional glass compositions ; and

Fig. 3 shows the relationship between thermal expansion coefficient and yield temperature (point) of glass compositions used in the present invention and conventional glass compositions.

The present invention is more specifically explained referring to the following examples.

Tables 1-5 show examples of the glass composition used in the present invention.

Table 6 shows examples of a comparative glass composition.

Tables 7-10 show physical properties of the glass compositions indicated on Tables 1-6.

Measuring methods of the physical properties of the respective glass compositions are as follows :

(1) Measurement of transition, yield and softening temperatures (point) :

The respective temperatures were measured on powder glasses by a differential thermal analyzer with a heating rate of 10 °C/min.

(2) Measurement of thermal expansion coefficient :

The thermal expansion coefficient was measured on test piece glasses of column shape of $5_\phi \times 20$ mm by a thermal dilatometer with a heating rate of 10 °C/min.

(See Tables pages 5-9)

Table 1

| Component \ Example | $V_2O_5$ | $P_2O_5$ | $Na_2O$ | $K_2O$ | $Rb_2O$ | $Cs_2O$ | $TeO_2$ | $Tl_2O$ | $B_2O_3$ | $ZnO$ | $Bi_2O_3$ | $SiO_2$ | $Al_2O_3$ | $Sb_2O_3$ | $CoO$ |
|---|---|---|---|---|---|---|---|---|---|---|---|---|---|---|---|
| 1 | 57.0 | 26.0 | — | — | — | — | — | 17.0 | — | — | — | — | — | — | — |
| 2 | 57.0 | 25.0 | — | — | — | — | 18.0 | — | — | — | — | — | — | — | — |
| 3 | 57.0 | 21.0 | — | — | — | 7.0 | — | 15.0 | — | — | — | — | — | — | — |
| 4 | 57.0 | 20.0 | — | — | — | 5.0 | 6.0 | 12.0 | — | — | — | — | — | — | — |
| 5 | 50.0 | 20.0 | — | 8.0 | — | — | 12.0 | 10.0 | — | — | — | — | — | — | — |
| 6 | 55.0 | 20.0 | — | 7.0 | — | — | 10.0 | 8.0 | — | — | — | — | — | — | — |
| 7 | 60.0 | 20.0 | — | 6.0 | — | — | 8.0 | 6.0 | — | — | — | — | — | — | — |
| 8 | 60.0 | 20.0 | 5.0 | — | — | — | 9.0 | 6.0 | — | — | — | — | — | — | — |
| 9 | 55.0 | 20.0 | — | — | 8.0 | — | 9.0 | 8.0 | — | — | — | — | — | — | — |
| 10 | 68.0 | 21.0 | 4.0 | 4.0 | — | — | 3.0 | — | — | — | — | — | — | — | — |
| 11 | 65.0 | 20.0 | — | 5.0 | — | 5.0 | 5.0 | — | — | — | — | — | — | — | — |
| 12 | 70.0 | 25.0 | — | — | — | 5.0 | — | — | — | — | — | — | — | — | — |
| 13 | 54.0 | 20.0 | — | 5.0 | — | — | 9.0 | 8.0 | 3.0 | 1.0 | — | — | — | — | — |

(Unit : wt%)

EP 0 180 405 B1

Table 2

(Unit : wt%)

| Component / Example | $V_2O_5$ | $P_2O_5$ | $Na_2O$ | $K_2O$ | $Rb_2O$ | $Cs_2O$ | $TeO_2$ | $Tl_2O$ | $B_2O_3$ | $ZnO$ | $Bi_2O_3$ | $SiO_2$ | $Al_2O_3$ | $Sb_2O_3$ | $CoO$ |
|---|---|---|---|---|---|---|---|---|---|---|---|---|---|---|---|
| 14 | 60.0 | 20.0 | — | 5.0 | — | — | 6.0 | 6.0 | 3.0 | — | — | — | — | — | — |
| 15 | 65.0 | 20.0 | — | 4.0 | — | — | 4.0 | 4.0 | 3.0 | — | — | — | — | — | — |
| 16 | 65.0 | 20.0 | — | 6.0 | — | — | — | 6.0 | 3.0 | — | — | — | — | — | — |
| 17 | 65.0 | 20.0 | — | 6.0 | — | — | 6.0 | — | 3.0 | — | — | — | — | — | — |
| 18 | 70.0 | 20.0 | — | 2.0 | — | — | 1.0 | 4.0 | 3.0 | — | — | — | — | — | — |
| 19 | 70.0 | 20.0 | — | 2.0 | — | — | 4.0 | 1.0 | 3.0 | — | — | — | — | — | — |
| 20 | 70.0 | 20.0 | — | 2.0 | — | — | 2.0 | 2.0 | 3.0 | 1.0 | — | — | — | — | — |
| 21 | 35.0 | 18.0 | — | 7.0 | — | 10.0 | 11.0 | 9.0 | 5.0 | 12.0 | — | 1.0 | 2.0 | — | — |
| 22 | 50.0 | 21.0 | — | — | — | 5.0 | — | — | 9.0 | 10.0 | — | — | — | — | — |
| 23 | 45.0 | 16.0 | — | 10.0 | — | — | — | — | 8.0 | 16.0 | — | — | — | — | — |
| 24 | 32.0 | 16.0 | — | 9.0 | — | — | 12.0 | 8.0 | 5.0 | 12.0 | — | 1.0 | 5.0 | — | — |
| 25 | 37.0 | 22.0 | — | 5.0 | — | — | 8.0 | 8.0 | 6.0 | 14.0 | — | — | — | — | — |
| 26 | 51.0 | 19.0 | — | 6.0 | — | — | 12.0 | 10.0 | — | — | — | 1.0 | 1.0 | — | — |

Table 3

| Component / Example | $V_2O_5$ | $P_2O_5$ | $Na_2O$ | $K_2O$ | $Rb_2O$ | $Cs_2O$ | $TeO_2$ | $Tl_2O$ | $B_2O_3$ | $ZnO$ | $Bi_2O_3$ | $SiO_2$ | $Al_2O_3$ | $Sb_2O_3$ | $CoO$ |
|---|---|---|---|---|---|---|---|---|---|---|---|---|---|---|---|
| 27 | 35.0 | 17.5 | — | 6.5 | — | — | 11.5 | 9.5 | 4.5 | 12.5 | — | 1.0 | 1.0 | — | — |
| 28 | 52.0 | 21.5 | — | 5.5 | — | — | 10.0 | 9.0 | — | — | — | 2.0 | 1.0 | — | — |
| 29 | 53.5 | 20.0 | — | 5.5 | — | — | 9.0 | 9.0 | — | 1.0 | — | 1.0 | 1.0 | — | — |
| 30 | 52.5 | 20.0 | — | 5.5 | — | — | 9.0 | 9.0 | — | 2.0 | — | 1.0 | 1.0 | — | — |
| 31 | 50.0 | 20.0 | — | 5.0 | — | — | 9.0 | 9.0 | — | 5.0 | — | 1.0 | 1.0 | — | — |
| 32 | 50.0 | 19.0 | — | 5.0 | — | — | 8.5 | 8.5 | — | 7.0 | — | 1.0 | 1.0 | — | — |
| 33 | 53.0 | 19.0 | — | 6.0 | — | — | 9.0 | 6.0 | 3.0 | 1.0 | — | 1.0 | 1.0 | — | — |
| 34 | 63.0 | 20.0 | — | 4.0 | — | — | 5.0 | 3.0 | 3.0 | 1.0 | — | 0.5 | 0.5 | — | — |
| 35 | 58.0 | 20.0 | — | 5.0 | — | — | 8.0 | 5.0 | 3.0 | 1.0 | — | — | — | — | — |
| 36 | 63.0 | 21.0 | — | 4.0 | — | — | 5.0 | 3.0 | 3.0 | 1.0 | — | — | — | — | — |
| 37 | 52.5 | 19.0 | — | 5.5 | — | — | 10.0 | 7.0 | 3.0 | 1.0 | — | 1.0 | 1.0 | — | — |
| 38 | 51.0 | 19.0 | — | 5.5 | — | — | 10.0 | 7.0 | 3.0 | 1.0 | 1.5 | 1.0 | 1.0 | — | — |
| 39 | 49.0 | 18.0 | — | 5.0 | — | — | 10.0 | 7.0 | 3.0 | 1.0 | 5.0 | 1.0 | 1.0 | — | — |

(Unit : wt%)

Table 4

| Component / Example | $V_2O_5$ | $P_2O_5$ | $Na_2O$ | $K_2O$ | $Rb_2O$ | $Cs_2O$ | $TeO_2$ | $Tl_2O$ | $B_2O_3$ | $ZnO$ | $Bi_2O_3$ | $SiO_2$ | $Al_2O_3$ | $Sb_2O_3$ | $CoO$ |
|---|---|---|---|---|---|---|---|---|---|---|---|---|---|---|---|
| 40 | 55.0 | 19.5 | — | 5.5 | — | — | 8.0 | 5.0 | 3.0 | 1.0 | 1.0 | 1.0 | 1.0 | — | — |
| 41 | 42.0 | 19.5 | — | 5.5 | — | — | 10.0 | 7.0 | 3.0 | 1.0 | 10.0 | 1.0 | 1.0 | — | — |
| 42 | 58.0 | 20.0 | — | 5.0 | — | — | 7.0 | 6.0 | 3.0 | — | 1.0 | — | — | — | — |
| 43 | 57.0 | 20.0 | — | — | — | 5.0 | 6.0 | 6.0 | 3.0 | 1.0 | — | 0.9 | 1.0 | — | 0.1 |
| 44 | 52.0 | 19.0 | — | 5.0 | — | 1.0 | 9.0 | 8.0 | 3.0 | 1.0 | — | 0.8 | 1.0 | — | 0.2 |
| 45 | 58.0 | 20.0 | — | 5.0 | — | — | 6.0 | 6.0 | 3.0 | — | — | 0.9 | 1.0 | — | 0.1 |
| 46 | 38.5 | 15.0 | 4.0 | 4.0 | — | — | 10.0 | — | 10.0 | 16.0 | — | 1.0 | 1.0 | — | 0.5 |
| 47 | 57.0 | 20.0 | — | 1.0 | — | 5.0 | 5.0 | 6.0 | 3.0 | 1.0 | — | 1.0 | 0.9 | — | 0.1 |
| 48 | 60.0 | 20.0 | — | — | — | 4.9 | 10.0 | 5.0 | — | — | — | — | — | — | 0.1 |
| 49 | 60.0 | 20.0 | — | — | — | 4.9 | 8.0 | 7.0 | — | — | — | — | — | — | 0.1 |
| 50 | 55.0 | 20.0 | — | — | — | 4.9 | 8.0 | 7.0 | — | — | — | — | — | 5.0 | 0.1 |
| 51 | 58.0 | 20.0 | — | — | — | 4.9 | 8.0 | 7.0 | — | — | — | 1.0 | 1.0 | — | 0.1 |
| 52 | 49.0 | 20.0 | — | — | — | 5.0 | 8.0 | 7.0 | 3.0 | — | — | — | — | 7.0 | 1.0 |

(Unit : wt%)

EP 0 180 405 B1

Table 5

| Component / Example | $V_2O_5$ | $P_2O_5$ | $Na_2O$ | $K_2O$ | $Rb_2O$ | $Cs_2O$ | $TeO_2$ | $Tl_2O$ | $B_2O_3$ | $ZnO$ | $Bi_2O_3$ | $SiO_2$ | $Al_2O_3$ | $Sb_2O_3$ | $CoO$ |
|---|---|---|---|---|---|---|---|---|---|---|---|---|---|---|---|
| 53 | 70 | 20 | 3 | — | — | — | – | 7 | – | — | — | — | — | — | — |
| 54 | 60 | 25 | 8 | — | — | — | – | 7 | — | — | — | — | — | — | — |
| 55 | 70 | 20 | — | 3 | — | — | – | 7 | — | — | — | — | — | — | — |
| 56 | 60 | 25 | — | 8 | — | — | — | 7 | — | — | — | — | — | — | — |
| 57 | 70 | 20 | — | — | 3 | — | — | 7 | — | — | — | — | — | — | — |
| 58 | 60 | 25 | — | — | 10 | — | — | 5 | — | — | — | — | — | — | — |
| 59 | 75 | 18 | — | — | — | 5 | | 2 | — | — | — | — | — | — | — |
| 60 | 70 | 20 | — | — | — | — | — | 10 | — | — | — | — | — | — | — |
| 61 | 70 | 20 | – | — | — | 10 | – | — | — | — | — | — | — | — | — |
| 62 | 70 | 20 | — | — | — | 5 | – | 5 | — | — | — | — | — | — | — |
| 63 | 65 | 20 | — | — | — | 5 | — | 10 | — | — | — | — | — | — | — |
| 64 | 60 | 20 | — | — | — | 7 | — | 13 | — | — | — | — | — | — | — |
| 65 | 55 | 20 | — | — | — | 9 | — | 16 | — | — | — | — | — | — | — |

(Unit : wt%)

EP 0 180 405 B1

## EP 0 180 405 B1

Table 6

| Example \ Component | P b O | $B_2 O_3$ | $S i O_2$ | $A\ell_2 O_3$ | Z n O |
|---|---|---|---|---|---|
| 1 | 7 2. 0 | 5. 0 | 1 2. 0 | 5. 0 | 6. 0 |
| 2 | 7 8. 0 | 1 3. 0 | 2. 0 | – | 7. 0 |
| 3 | 8 4. 0 | 1 1. 0 | 4. 0 | 1. 0 | – |
| 4 | 8 2. 0 | 1 2. 0 | 3. 0 | 3. 0 | – |
| 5 | 6 6. 0 | 9. 0 | 2 0. 0 | 1. 0 | 4. 0 |
| 6 | 8 5. 0 | 1 3. 0 | 1. 0 | 1. 0 | – |

(Unit : wt%)

Table 7

| | Transition point (°C) | Yield point (°C) | Softening point (°C) | Thermal expansion coefficient $(10^{-7}/°C)$ |
|---|---|---|---|---|
| Example 1 | 2 6 5 | 2 8 1 | 3 2 5 | 1 0 0 |
| 2 | 2 7 0 | 2 9 6 | 3 5 0 | 9 8 |
| 3 | 2 6 7 | 2 9 0 | 3 3 4 | 1 0 9 |
| 4 | 2 6 6 | 2 8 8 | 3 4 4 | 9 6 |
| 5 | 2 7 7 | 2 9 8 | 3 5 5 | 1 3 0 |
| 6 | 2 7 8 | 3 0 5 | 3 5 2 | 1 1 9 |
| 7 | 2 7 6 | 2 9 2 | 3 5 0 | 1 1 4 |
| 8 | 2 9 6 | 3 1 7 | 3 7 5 | 9 0 |
| 9 | 2 9 5 | 3 1 5 | 3 6 8 | 1 0 8 |
| 10 | 2 6 7 | 2 9 2 | 3 5 0 | 1 0 7 |
| 11 | 2 6 5 | 2 8 8 | 3 4 6 | 1 0 3 |
| 12 | 2 7 8 | 3 1 0 | 3 7 6 | 7 4 |
| 13 | 2 9 0 | 3 1 8 | 3 7 7 | 1 1 3 |
| 14 | 2 8 6 | 3 0 7 | 3 6 5 | 9 5 |
| 15 | 2 6 7 | 2 8 9 | 3 4 5 | 1 0 0 |
| 16 | 2 6 8 | 2 8 8 | 3 3 4 | 1 0 8 |
| 17 | 2 7 4 | 2 9 8 | 3 5 3 | 1 0 2 |
| 18 | 2 7 8 | 3 0 3 | 3 6 0 | 8 1 |
| 19 | 2 7 7 | 3 0 8 | 3 7 0 | 7 5 |
| 20 | 2 7 4 | 3 0 5 | 3 6 6 | 7 5 |

10

Table 8

| | | Transition point (°C) | Yield point (°C) | Softening point (°C) | Thermal expansion coefficient ($10^{-7}$/°C) |
|---|---|---|---|---|---|
| Example | 21 | 2 7 4 | 3 2 2 | 3 9 7 | 9 5 |
| | 22 | 2 5 6 | 2 7 3 | 3 6 2 | 1 1 0 |
| | 23 | 2 4 5 | 2 8 3 | 3 5 5 | 1 1 2 |
| | 24 | 2 7 4 | 3 2 6 | 3 8 5 | 1 0 0 |
| | 25 | 2 9 6 | 3 3 2 | 4 0 0 | 8 9 |
| | 26 | 2 8 0 | 3 0 6 | 3 5 8 | 1 1 3 |
| | 27 | 2 7 7 | 3 1 4 | 3 7 6 | 9 8. |
| | 28 | 2 6 2 | 3 0 5 | 3 6 0 | 1 1 8 |
| | 29 | 2 8 0 | 3 0 6 | 3 5 7 | 1 2 4 |
| | 30 | 2 8 0 | 3 0 4 | 3 5 8 | 1 1 3 |
| | 31 | 2 7 4 | 2 9 0 | 3 5 2 | 1 2 0 |
| | 32 | 2 7 0 | 2 9 0 | 3 4 7 | 1 1 7 |
| | 33 | 2 7 4 | 3 0 0 | 3 5 8 | 1 1 0 |
| | 34 | 2 6 3 | 2 8 0 | 3 3 7 | 9 8 |
| | 35 | 2 7 0 | 2 9 5 | 3 5 2 | .1 0 8 |
| | 36 | 2 7 2 | 3 0 9 | 3 4 9 | 9 8 |
| | 37 | 2 6 8 | 2 9 2 | 3 5 4 | 1 1 1 |
| | 38 | 2 6 6 | 2 8 8 | 3 4 4 | 1 1 4 |
| | 39 | 2 7 4 | 3 0 4 | 3 5 6 | 1 1 9 |
| | 40 | 2 7 8 | 2 9 5 | 3 5 0 | 1 1 1 |

Table 9

| | Transition point (°C) | Yield point (°C) | Softening point (°C) | Thermal expansion coefficient ($10^{-7}$/°C) |
|---|---|---|---|---|
| Example.41 | 2 9 6 | 3 1 8 | 3 7 8 | 1 1 0 |
| 42 | 2 7 2 | 2 9 0 | 3 4 7 | 9 5 |
| 43 | 2 6 1 | 2 8 5 | 3 4 8 | 8 8 |
| 44 | 2 6 5 | 2 8 7 | 3 5 5 | 1 1 9 |
| 45 | 2 7 1 | 2 9 2 | 3 5 8 | 1 1 5 |
| 46 | 3 0 7 | 3 4 6 | 3 9 3 | 8 7 |
| 47 | 2 7 4 | 2 9 4 | 3 5 3 | 9 5 |
| 48 | 2 7 0 | 2 9 4 | 3 5 4 | 1 0 5 |
| 49 | 2 8 2 | 2 9 7 | 3 5 7 | 1 0 0 |
| 50 | 3 0 8 | 3 2 6 | 3 8 4 | 8 9 |
| 51 | 2 7 0 | 2 8 2 | 3 3 9 | 1 0 3 |
| 52 | 3 0 5 | 3 3 0 | 3 9 5 | 8 5 |
| 53 | 2 5 0 | 2 7 3 | 3 2 6 | 1 0 5 |
| 54 | 2 5 8 | 2 7 3 | 3 4 0 | 1 1 2 |
| 55 | 2 6 0 | 2 7 4 | 3 2 0 | 9 6 |
| 5 6 | 2 5 8 | 2 7 0 | 3 1 8 | 9 8 |
| 5 7 | 2 5 7 | 2 6 9 | 3 1 6 | 9 2 |
| 58 | 2 6 3 | 2 8 3 | 3 3 6 | 9 8 |
| 59 | 2 5 0 | 2 6 7 | 3 1 0 | 8 7 |
| 6C | 2 5 5 | 2 7 4 | 3 3 0 | 8 4 |

Table 10

| | | Transition point (°C) | Yield point (°C) | Softening point (°C) | Thermal expansion coefficient ($10^{-7}$/°C) |
|---|---|---|---|---|---|
| | 61 | 2 6 0 | 2 7 5 | 3 2 8 | 9 2 |
| | 62 | 2 5 8 | 2 7 4 | 3 2 5 | 9 0 |
| | 63 | 2 5 8 | 2 7 4 | 3 2 3 | 9 8 |
| | 64 | 2 7 2 | 2 9 2 | 3 4 1 | 1 0 6 |
| | 65 | 2 7 2 | 2 8 9 | 3 4 0 | 1 2 1 |
| Comparative Example | 1 | 3 7 2 | 3 9 5 | 4 6 7 | 8 8 |
| | 2 | 3 5 0 | 3 7 3 | 4 3 5 | 9 2 |
| | 3 | 3 0 2 | 3 3 3 | 4 0 9 | 1 1 0 |
| | 4 | 3 2 7 | 3 4 7 | 4 0 5 | 1 0 2 |
| | 5 | 3 9 5 | 4 1 9 | 5 0 5 | 9 5 |
| | 6 | 3 1 3 | 3 3 2 | 3 8 6 | 1 1 3 |

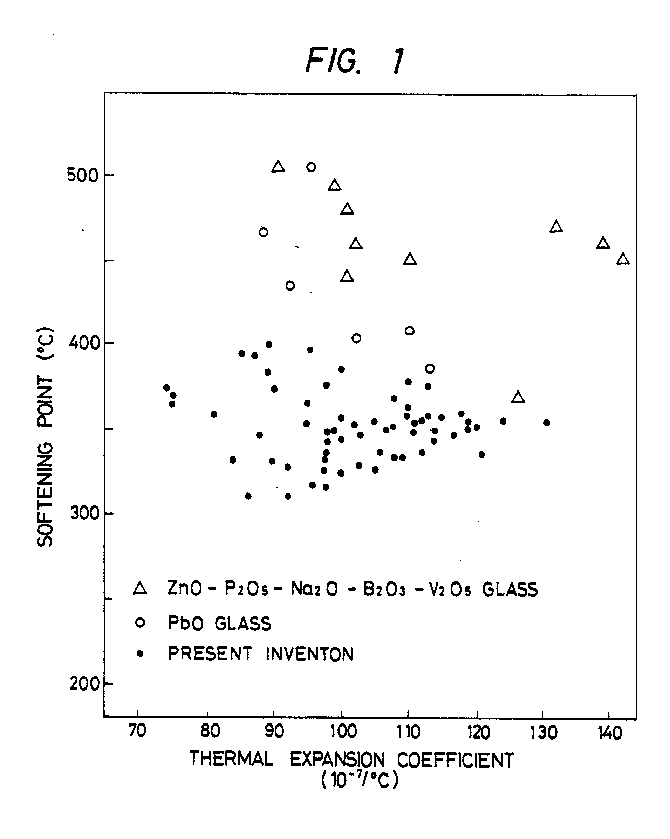

Tables 7-10 and Fig. 1 show that the softening temperature of the exemplified glass compositions used in the present invention is 310-400 °C, which is much lower than those of conventional glass compositions such as the $ZnO$-$P_2O_5$-$Na_2O$-$B_2O_3$-$V_2O_5$ system and PbO glass. They also show that although the thermal expansion coefficient of the exemplified glass compositions used in the present invention varies from 70 to $130 \times 10^{-7}$/°C the variation of softening temperatures of the present glass composition with thermal expansion coefficient is much smaller than in the case of conventional glass compositions, in that, with conventional glass compositions, the lower the thermal expansion coefficient is, the higher the softening temperature is. However, with the glass composition of the present invention, the relationship between the thermal expansion coefficient and the softening temperature is substantially flat as seen from Fig. 1. Thus with the glass composition of the present invention, when specific amounts of glass components are selected to reduce the thermal expansion coefficient, the softening temperature of the glass composition does not substantially increase.

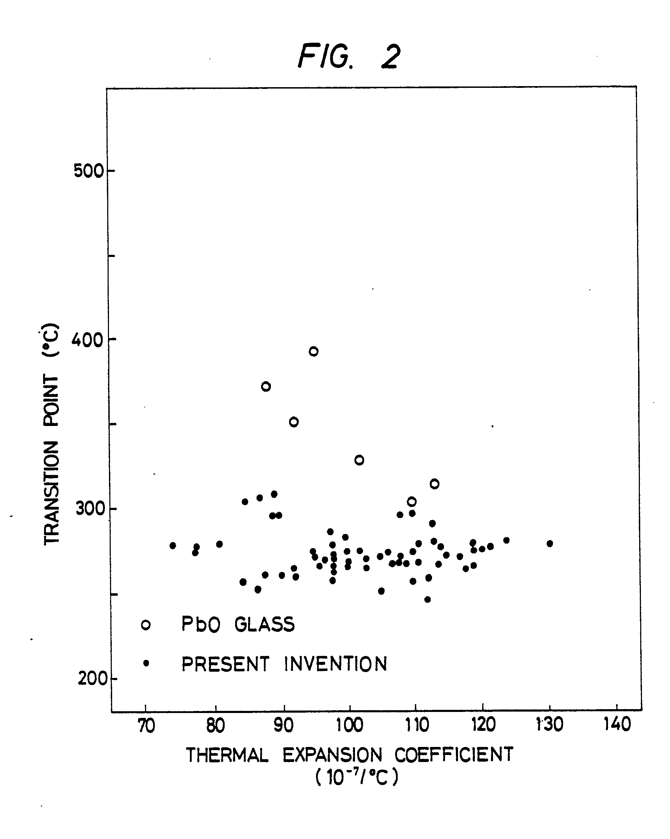

Tables 7-10 and Fig. 2 show that the transition temperature of the exemplified glass compositions used in the present invention is 240-310 °C, which is much lower than those of conventional PbO glass compositions. Further, although the thermal expansion coefficient of the exemplified glass compositions used in the present invention varies from 70 to $130 \times 10^{-7}$/°C, the variation of transition temperatures with thermal expansion coefficients in the exemplified glass compositions is much smaller than in conventional PbO glass compositions as well as being smaller than the variation in softening temperature of the exemplified glass compositions.

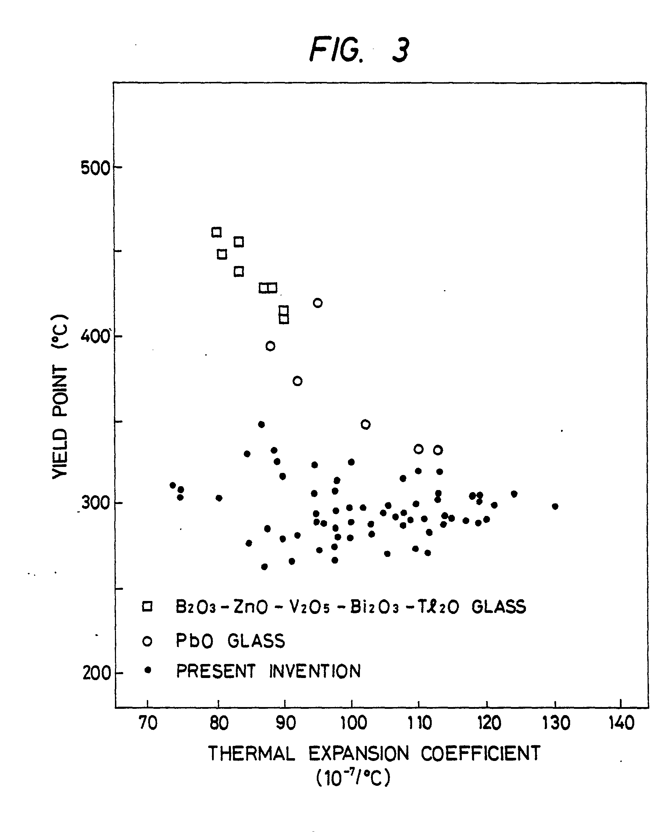

Tables 7-10 and Fig. 3 show that the yield temperature of the exemplified glass compositions used in the present invention is 260-350 °C, which is much lower than that of conventional glass compositions such as the $B_2O_3$-$ZnO$-$V_2O_5$-$Bi_2O_3$-$Tl_2O$ system and PbO glass. Further, although the thermal expansion coefficient of the glass compositions used in the present invention varies from 70 to $130 \times 10^{-7}$/°C the variation of yield temperatures with thermal expansion coefficients In the exemplified glass compositions is much smaller than in the conventional glass compositions as well as being smaller than the variation in softening temperature of the exemplified glass compositions.

Accordingly the working temperature of the present glass composition is reduced to 360-500 °C, and further suitable thermal expansion coefficients which are a little smaller than that of a specific ceramic, particularly ferrite, may be selected by adjusting the amounts of glass components while obtaining a low softening temperature of the glass composition.

**Claims**

1. An article including at least one ceramic part bonded or filled by a glass composition, said composition essentially consisting of
(a) 35-75 wt% of vanadium pentoxide ($V_2O_5$),
(b) 15-30 wt% of phosphorus pentoxide ($P_2O_5$),
and
(c) 5-40 wt% of at least one metallic oxide with a low melting temperature selected from sodium monoxide ($Na_2O$), potassium monoxide ($K_2O$), rubidium monoxide ($Rb_2O$), caesium monoxide ($Cs_2O$), tellurium dioxide ($TeO_2$) and thallium monoxide ($Tl_2O$),
and optionally further including at least one of boron oxide ($B_2O_3$), zinc oxide (ZnO), bismuth trioxide ($Bi_2O_3$), silicon dioxide ($SiO_2$), aluminium oxide ($Al_2O_3$), antimony pentoxide ($Sb_2O_5$) and cobalt monoxide (CoO), wherein
(d1) the amount of $B_2O_3$ is not more than 10 wt%,
(d2) the amount of ZnO is not more than 16 wt%,
(d3) the amount of $Bi_2O_3$ is not more than 12 wt%,
(d4) the amount of $SiO_2$ is not more than 3 wt%,
(d5) the amount of $Al_2O_3$ is not more than 5 wt%,
(d6) the amount of $Sb_2O_5$ is not more than 7 wt%,
and
(d7) the amount of CoO is not more than 1 wt%.
2. An article according to claim 1 wherein in the glass composition
(c1) the amount of $Na_2O$, $K_2O$, $Rb_2O$, and $Cs_2O$ is in total not more than 15 wt%,
(c2) the amount of $TeO_2$ is not more than 25 wt%,
and
(c3) the amount of $Tl_2O$ is not more than 20 wt%.
3. An article according to claim 2 wherein in the glass composition
(a) the amount of $V_2O_5$ is 55-70 wt%,
(b) the amount of $P_2O_5$ is 18-25 wt%,
(c1) the amount of $Na_2O$, $K_2O$, $Rb_2O$ and $Cs_2O$ is in total not more than 10 wt%,
(c2) $TeO_2$ is absent, and
(c3) the amount of $Tl_2O$ is not more than 10 wt%.
4. An article according to any one of claims 1 to 3 wherein the glass composition remains in a substantially non-crystalline state during reheating.
5. An article according to any one of claims 1 to 4, wherein the glass composition has a softening temperature of 310-400 °C and a thermal expansion coefficient of $70\text{-}130 \times 10^{-7}/°C$.


**Patentansprüche**

1. Gegenstand, enthaltend wenigstens ein keramisches Teil, das mit einer Glaszusammensetzung gebunden oder gefüllt ist, wobei die Glaszusammensetzung im wesentlichen besteht aus
(a) 35 bis 75 Gew.-% Vanadiumpentoxid ($V_2O_5$),
(b) 15 bis 30 Gew.-% Phosphorpentoxid ($P_2O_5$) und
(c) 3 bis 40 Gew.-% wenigstens eines Metalloxids mit niedriger Schmelztemperatur, das ausgewählt ist aus der Gruppe Natriummonoxid ($Na_2O$), Kaliummonoxid ($K_2O$), Rubidiummonoxid ($Rb_2O$), Caesiummonoxid ($Cs_2O$), Tellurdioxid ($TeO_2$) und Thalliummonoxid ($Tl_2O$), und
gegebenenfalls außerdem wenigstens ein weiteres Oxid aus der Gruppe Boroxid ($B_2O_3$), Zinkoxid (ZnO), Bismuttrioxid ($Bi_2O_3$), Siliciumdioxid ($SiO_2$), Aliminiumoxid ($Al_2O_3$), Antimonpentoxid ($Sb_2O_5$) und Cobaltmonoxid (CoO) enthält, wobei
(d1) die Menge an $B_2O_3$ nicht größer als 10 Gew.-%,
(d2) die Menge an ZnO nicht größer als 16 Gew.-%,
(d3) die Menge an $Bi_2O_3$ nicht größer als 12 Gew.-%,
(d4) die Menge an $SiO_2$ nicht größer als 3 Gew.-%,
(d5) die Menge an $Al_2O_3$ nicht größer als 5 Gew.-%,
(d6) die Menge an $Sb_2O_5$ nicht größer als 7 Gew.-% und
(d7) die Menge an CoO nicht größer als 1 Gew.-% ist.
2. Gegenstand nach Anspruch 1, worin in der Glaszusammensetzung
(c1) die Gesamtmenge an $Na_2O$, $K_2O$, $Rb_2O$ und $Cs_2O$ nicht größer als 15 Gew.-%,
(c2) die Menge an $TeO_2$ nicht größer als 25 Gew.-% und
(c3) die Menge an $Tl_2O$ nicht größer als 20 Gew.-% ist.
3. Gegenstand nach Anspruch 2, worin in der Glaszusammensetzung
(a) die Menge an $V_2O_5$ 55 bis 70 Gew.-%,
(b) die Menge an $P_2O_5$ 18 bis 25 Gew.-%,
(c1) die Gesamtmenge an $Na_2O$, $K_2O$, $Rb_2O$ und $Cs_2O$ nicht größer als 10 Gew.-% ist,

(c2) TeO$_2$ nicht enthalten ist und

(c3) die Menge an Tl$_2$O nicht über 10 Gew.-% liegt.

4. Gegenstand nach einem der Ansprüche 1 bis 3, worin die Glaszusammensetzung während des Wiedererhitzens in einem im wesentlichen nicht-kristallinen Zustand bleibt.

5. Gegenstand nach einem der Ansprüche 1 bis 4, worin die Glaszusammensetzung eine Erweichungstemperatur von 310 bis 400 °C und einen thermischen Ausdehnungskoeffizienten von 70 bis 130 X 10$^{-7}$/°C hat.

**Revendications**

1. Article incluant au moins une pièce de céramique qui est liée à ou remplie par une composition de verre, ladite composition constituée essentiellement de

(a) 35-75 % en poids de pentoxyde de vanadium (V$_2$O$_5$),

(b) 15-30 % en poids de pentoxyde de phosphore (P$_2$O$_5$), et

(c) 5-40 % en poids d'au moins un oxyde métallique ayant une faible température de fusion choisi parmi le monoxyde de sodium (Na$_2$O), le monoxyde de potassium (K$_2$O), le monoxyde de rubidium (Rb$_2$O), le monoxyde de césium (Cs$_2$O), le dioxyde de tellure (TeO$_2$) et le monoxyde de thallium (Tl$_2$O),

et incluant en outre facultativement l'un des corps suivants : oxyde de bore (B$_2$O$_3$), oxyde de zinc (ZnO), trioxyde de bismuth (Bi$_2$O$_3$), dioxyde de silicium (SiO$_2$), oxyde d'aluminium (Al$_2$O$_3$), pentoxyde d'antimoine (Sb$_2$O$_5$) et monoxyde de cobalt (CoO), où

(d1) la quantité de B$_2$O$_3$ ne dépasse pas 10 % en poids,

(d2) la quantité de ZnO ne dépasse pas 16 % en poids,

(d3) la quantité de Bi$_2$O$_3$ ne dépasse pas 12 % en poids,

(d4) la quantité de SiO$_2$ ne dépasse pas 3 % en poids,

(d5) la quantité d'Al$_2$O$_3$ ne dépasse pas 5 % en poids,

(d6) la quantité de Sb$_2$O$_3$ ne dépasse pas 7 % en poids, et

(d7) la quantité de CoO ne dépasse pas 1 % en poids.

2. Article selon la revendication 1 dans lequel dans la composition de verre

(c1) la quantité de Na$_2$O, K$_2$O, Rb$_2$O et Cs$_2$O ne dépasse pas au total 15 % en poids,

(c2) la quantité de TeO$_2$ ne dépasse pas 25 % en poids, et

(c3) la quantité de Tl$_2$O ne dépasse pas 20 % en poids.

3. Article selon la revendication 2 dans lequel dans la composition de verre

(a) la quantité de V$_2$O$_5$ est de 55-70 % en poids,

(b) la quantité de P$_2$O$_5$ est de 18-25 % en poids,

(c1) la quantité de Na$_2$O, K$_2$O, Rb$_2$O et Cs$_2$O ne dépasse pas au total 10 % en poids,

(c2) TeO est absent, et

(c3) la quantité de Tl$_2$O ne dépasse pas 10 % en poids.

4. Article selon l'une quelconque des revendications 1 à 3 dans lequel la composition de verre reste dans un état essentiellement non cristallin pendant le réchauffage.

5. Article selon l'une quelconque des revendications 1 à 4, dans lequel la composition de verre a une température de ramollissement de 310-400 °C et un coefficient de dilatation thermique de 70-130 x 10$^{-7}$/°C.

FIG. 1

# FIG. 2

FIG. 3